# EUROPEAN PATENT SPECIFICATION

(11) **EP 1 827 187 B1**
(45) Date of publication and mention of the grant of the patent: **05.01.2011**
(21) Application number: 05856954.2
(22) Date of filing: 15.11.2005
(51) Int. Cl.: A47J 37/10

(54) **METHOD OF COOKING A FOOD ITEM**
VERFAHREN ZUM KOCHEN EINES NAHRUNGSMITTELS
TECHNIQUE DE CUISSON D'ALIMENTS

(30) Priority: 16.11.2004 US 990282
(43) Date of publication of application: 05.09.2007
(73) Proprietor: Saint-Gobain Performance Plastics Corporation, Aurora, OH 44202 (US)
(72) Inventor: SPOHN, Peter, D., Brookline, New Hampshire 03033 (US)
(74) Representative: Leidescher, Thomas
(86) International application number: PCT/US2005/041211
(87) International publication number: WO 2006/073566

(56) References cited:
- WO-A-01/45541
- FR-A- 2 509 976
- FR-A- 2 545 415
- US-A- 4 320 699
- US-A1- 2001 034 170

## Description

### FIELD OF THE DISCLOSURE

This disclosure, in general, relates to methods of cooking food items.

### BACKGROUND

In both domestic and industrial kitchens, people cook food items and, in particular, bake goods for consumption. The quality of the food item or baked good is evaluated, in part, based on the quality of ingredients and frequently, on the shape, texture, and flavor. Baked goods, such as cookies, cakes, pies, rolls and bread are often baked in pans or on cookie sheets. Frequently, baked goods stick to pans or cooking sheets during baking. When baked goods stick to cooking sheets and through heat transfer from the metal surface, they have a tendency to burn, changing the flavor of the item. Attempts to remove stuck baked goods from a cooking sheet often result in the breaking or disfiguring of the baked goods. In addition, the pans or cooking sheets are difficult to clean when baked good stick during baking. Food particles left on poorly cleaned pans is unsanitary.

To prevent sticking, many recipes call for greasing and/or flouring pans and cooking sheets before placing baked goods on them. Alternative approaches include the use of waxed papers. However, both of these methods lead to waste, extra mess, and are generally unreliable.

Manufacturers ofpans and cooking sheets turned to surface coatings to make "non-stick" pans, which are advertised to prevent sticking and to be easier to clean. However, over time, such surface coatings are damaged or wear, leading to sticking and difficulty in cleaning. Goods baked on such pans may stick, leading to broken goods with poor flavor. In addition, such coatings are generally not thick enough to impact the heat transfer from the pan to the baked good. As such, an improved method of baking goods would be desirable.

Document FR-A-2 509 976 discloses a pan equipped with an exchangeable disc and means of positioning and fixing of this disc. This disc gets a coating having anti-adhesive properties of the type PTFE. The disc may preferably be of aluminum, silicone or other materials such as titanium, steel or others. The pan has intervals which can compensate a thermal expansion of the disc such that the disc does not come into contact with the surrounding wall of the pan.

Document FR-A-2 545 415 discloses glass fabrics coated with silicone elastomers dedicated to be put on metallic plates for cooking Viennese bread and pastries and methods of manufacturing such glass fabrics by rolling out of the glass fabric over a liquid silicone elastomer layer with vulcanization of the latter being carried out cold and in the open air.

Document US 2001-034170 A1 discloses a double-faced PTFE-silicone rubber reinforced composite, the purpose of the PTFE coated surface being to allow the composite to slide over other surfaces, while food items may be placed on the silicone rubber surface. Use of the composite for conveyor belts is discussed.

### SUMMARY

In one particular embodiment, the disclosure is directed to a method for heating a food item. The method includes placing a cooking sheet liner on a cooking sheet. The cooking sheet liner has a first major surface formed of silicone elastomer and has a second major surface formed of fluorinated polymer. The method also includes placing a food item on the cooking sheet liner, placing the cooking sheet, the cooking sheet liner, and the food item in an oven, and heating same.

In another exemplary embodiment, the disclosure is directed to a cooking support assembly including a rigid backing member and a cooking substrate. The cooking substrate has a first major surface formed of silicone elastomer and has a second major surface formed of fluorinated polymer. The first major surface substantially contacts the rigid backing member.

In a further exemplary embodiment, the disclosure is directed to a merchandised article including a cooking sheet liner having a first major surface formed of silicone elastomer and having a second major surface formed of fluorinated polymer. The merchandising article also includes packaging coupled to the cooking sheet liner. The packaging provides a sales message associated with the cooking sheet liner. The merchandising article also includes printed instructions included with the packaging. The printed instructions direct a user to utilize the cooking sheet liner in an oven.

In another embodiment, the disclosure is directed to a method for heating a food item. The method includes placing a cooking sheet liner on a cooking sheet. The cooking sheet liner has a first major surface formed of elastomeric material. The cooking sheet liner has a second major surface formed of polymeric material. The elastomeric material has a higher coefficient of friction than the polymeric material. The method further includes placing a food item on the cooking sheet liner, placing the cooking sheet, the cooking sheet liner, and the food item in an oven, and heating same.

In a further embodiment, the disclosure is directed to a method for heating a food item. The method includes placing a food item on a cooking substrate. The cooking substrate has a first major surface formed of silicone elastomer and has a second major surface formed of fluorinated polymer. The method further includes placing the cooking substrate, and the food item in an oven, and heating same.

### BRIEF DESCRIPTION OF THE DRAWINGS

The present disclosure may be better understood, and its numerous features and advantages made apparent to those skilled in the art by referencing the accompanying drawings.

FIG. 1 includes a diagram illustrating an exemplary embodiment of a cooking sheet liner and cooking sheet.

FIG. 2 includes a diagram illustrating an exemplary cooking sheet, a cooking sheet liner, and uncooked food items.

FIGS. 3 and 4 include diagrams illustrating exemplary embodiments of cooking sheet liners.

FIGS 5, 6, 7, and 8 include diagrams illustrating exemplary cooking sheet liners.

FIG. 9 includes a diagram illustrating an exemplary merchandised article including a cooking sheet liner.

FIGS. 10 and 11 include flow diagrams illustrating exemplary methods for baking food items.

The use of the same reference symbols in different drawings indicates similar or identical items.

### DETAILED DESCRIPTION OF THE DRAWINGS

In one particular embodiment, the disclosure is directed to a method for baking a food item. The method includes placing a cooking sheet liner on a cooking sheet, placing a food item, which may be raw, partially cooked, fully cooked, frozen, etc., on the cooking sheet liner and placing the cooking sheet liner and raw food item in an oven. The cooking sheet liner has a first major surface formed of silicone elastomer and has a second major surface formed of fluorinated polymer. In one exemplary embodiment, the silicone elastomer has a higher coefficient of friction than the fluorinated polymer. The first major surface formed of silicone elastomer may be placed face down on the cooking sheet and food items may be placed on the second major surface formed of fluorinated polymer.

In another exemplary embodiment, the disclosure is directed to a merchandised article that includes a cooking sheet liner, packaging coupled to the cooking sheet liner and instructions associated with the use of the cooking sheet liner. The cooking sheet liner has a first major surface formed of silicone elastomer and has a second major surface formed of fluorinated polymer. In one exemplary embodiment, the packaging is coupled to the cooking sheet liner and includes indications inducing purchase of the cooking sheet liner. The instructions may be instructions printed on the packaging or separate printed instructions attached to or included with the packaging. The instructions may direct a user to place the cooking sheet liner on a cooking sheet. For example, the instructions may direct the user to place the first major surface formed of silicone elastomer face down on a cooking sheet and to place food items on the second major surface formed of fluorinated polymer.

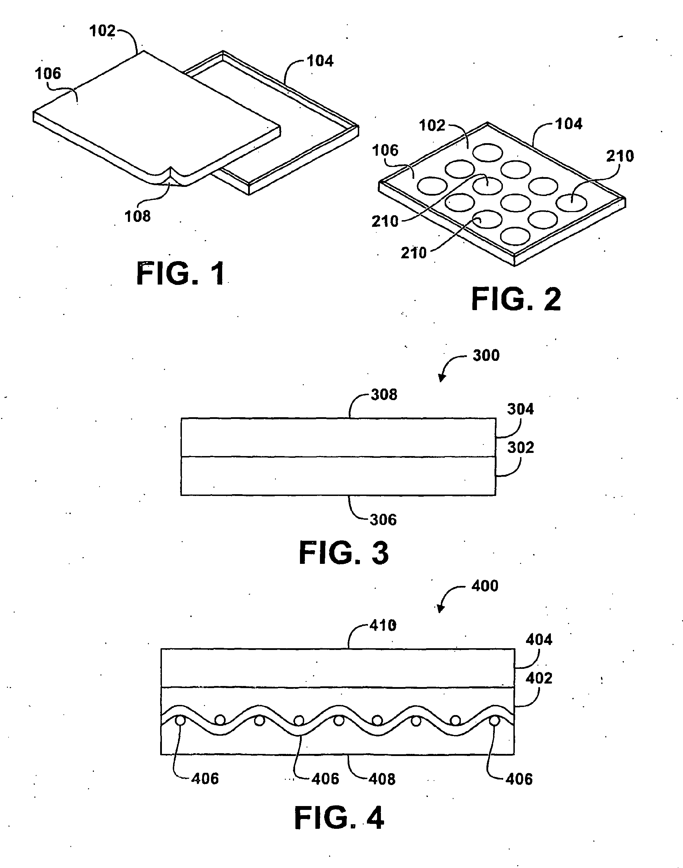

FIG. 1 illustrates an exemplary cooking sheet liner 102 and a pan or cooking sheet 104. The exemplary cooking sheet liner 102 includes a first major surface 108 and a second major surface 106. The first major surface 108 may be formed of low surface energy, high coefficient of friction material, such as silicone elastomer. The second major surface 106 may be formed of low surface energy, low coefficient of friction material, such as fluorinated polymer. Generally, low surface energy materials are stain resistant and stick resistant. The cooking sheet may be a baking pan, pie plate, cookie sheet, roasting pan, bunting pan, or cake pan. To cooking sheet liner 102 and the cooking sheet 104 may be combined to form a cooking support assembly.

As illustrated in FIG. 2, the cooking sheet liner 102 may be placed within or on the cooking sheet 104 such that the first major surface (not shown) is in contact with the cooking sheet or pan 104. The second major surface 106 is face up and uncooked or raw food items 210 may be placed on the second major surface. In one exemplary embodiment, the pan, cooking sheet liner and uncooked food items are placed in an oven and the food items are baked. Once baking is complete, the pan, cooking sheet liner and baked goods may be removed from the oven. The baked goods are easily removed from surface 106. The cooking sheet liner may be removed from the cooking sheet or pan 106 and subsequently cleaned.

In one exemplary embodiment, the cooking sheet liner is formed of at least two layers. FIGs. 3 and 4 illustrate exemplary cooking sheet liners. For example, FIG. 3 illustrates a two layer cooking sheet liner 300. Layers 302 and 304 form major surfaces 306 and 308 respectively.

Layer 302 includes a low surface energy material, such as a non-stick material. In one particular embodiment, the material has a low coefficient of friction. For example, layer 302 may include fluorinated polymer. The fluorinated polymer can be a homopolymer of fluorine-substituted monomers or a copolymer including at least one fluorine-substituted monomer. Exemplary fluorine substituted monomers include tetrafluoroethylene (TFE), vinylidene fluoride (VF2), hexafluoropropylene (HFP), chlorotrifluoroethylene (CTFE), perfluoroethylvinyl ether (PEVE), perfluoromethylvinyl ether (PMVE), and perfluoropropylvinyl ether (PPVE). Examples of fluorinated polymers include polytetrafluoroethylene (PTFE), perfluoroalkylvinyl ether (PFA), fluorinated ethylene-propylene copolymer (FEP), ethylene tetrafluoroethylene copolymer (ETFE), polyvinylidene fluoride (PVDF), polychlorotrifluoroethylene (PCTFE), and TFE copolymers with VF2 and/or HFP. In one particular embodiment, layer 302 includes PTFE.

While layer 302 is illustrated as a single layer, layer 302 may be formed of several layers of one or more fluorpolymers. For example, layer 302 may be formed through coating several layers of fluoropolymer and sintering after each coating or after the final coat is applied.

Layer 304 includes high coefficient of friction material. For example, layer 304 may include elastomeric material. Exemplary materials include polyorganosiloxane, polyolefins, polyurethane, ethylene propylene diene monomer (EPDM) polymers, and mixtures thereof. In one exemplary embodiment, the high coefficient of friction material is substantially free of fluorination. In one particular embodiment, the high coefficient material also has low surface energy and may, for example, be non-stick material. For example, layer 304 may include polyorganosiloxane, such as silicone elastomer.

Other components may be present in the materials used to form layers 302 and 304. For example, the layers can include fillers, light stabilizers, pigments, and bonding aids. Exemplary fillers include talc, silica, and calcium carbonate. Exemplary light absorbing additives and pigments include TiO₂, Fe₂O₃, carbon black, and calcined mixed metal oxides.

In another exemplary embodiment, the cooking sheet liner may include reinforcement. FIG. 4 illustrates an exemplary cooking sheet liner 400 including reinforcement 406. For example, layer 402 may include low surface energy material and form a major surface 408. Layer 404 may include high coefficient of friction material and form a major surface 410. Layer 402 may include materials described above in relation to layer 302 of FIG. 3 and layer 404 may include materials described above in relation to layer 304 of FIG. 3. In one exemplary embodiment, the reinforcement material 406 is incorporated into layer 402. Alternatively, the reinforcement material 406 is incorporated into layer 404. In another exemplary embodiment, the reinforcement material 406 is located between layer 402 and 404.

The reinforcement material 406 may be formed of organic or inorganic materials. Exemplary inorganic materials include carbon fiber, metal filament, such as steel and copper wire, ceramic filaments, such as glass fiber, and blends thereof. Exemplary organic materials include natural fibers, such as cotton, wool, and blends thereof and polymeric materials, such as polyester, polyamide, polyaramid, polyamideimide polyimide, polyolefin, and blends or copolymers thereof. In one exemplary embodiment, the reinforcement material 406 is incorporated into layer 402 and is formed from polyaramid materials, such as meta- or para- polyaramid materials. In another exemplary embodiment, the reinforcement material 406 is incorporated into layer 404 and is formed from polyester materials or polyamide material, such as nylon materials. Generally, the reinforcement material 406 is coated with one or both of the materials of layers 402 and 404, such as generally embedded in one of the layers 402 or 404. For example, the reinforcement material 406 may be coated with fluorinated polymer, such as typically embedded in layer 402. In another example, the reinforcement material 406 may be coated with silicone elastomer, such as typically embedded in layer 404.

In one exemplary embodiment, the reinforcement material 406 includes woven or non-woven material. In another exemplary embodiment, the reinforcement material includes randomly distributed fibers. In alternative embodiments, the cooking sheet liner may include one or more layers, sheets or types of reinforcement material.

In one particular embodiment, the cooking sheet liner is configured to withstand cooking and processing temperatures without charring, burning, or melting. For example, reinforcement materials, low coefficient of friction materials, and high coefficient of friction materials may be selected that withstand cooking temperatures at least about 177°C (350°F), such as at least about 232°C (450°F), at least about 260°C (500°F), or at least about 288°C (550°F). In particular examples, reinforcement materials are selected to withstand processing temperatures of the other materials. For example, the reinforcement material may be selected to withstand processing temperatures at least about 260°C (500°F), such as at least about 316°C (600°F), at least about 343°C (650°F), or at least about 399°C (750°F). In one particular embodiment, a reinforcement material, such as polyaramid, is selected to withstand the processing temperatures of low surface energy, low coefficient of friction material, such as PTFE. One side of the reinforced PTFE may then be coated with high coefficient of friction material, such as silicone elastomer, in a process using lower processing temperatures.

In one exemplary embodiment, the cooking sheet liner is formed through a process of coating a carrier web or, optionally, a reinforcement material with a low surface energy, low coefficient of friction material, such as fluorinated polymer, such as PTFE. The carrier web and/or, optionally, the reinforcement material are paid from a roll and coated on one side with a suspension including fluorinated polymer particles dispersed in a liquid medium. In one particular embodiment, the suspension includes Fluon® ADILN PTFE aqueous dispersion to which 0.5% Zonyl® FSO fluorosurfactant from DuPont has been added.

A blade or metering rods are positioned to remove excess suspension from the carrier web. The suspension is then dried and sintered to form a layer on the carrier web. In one particular embodiment, the coated suspension is dried at about 167°C (332°F) and the sintered at about 343°C (649°F). The thickness of the layer may be increased by repeating the coating process. In one exemplary embodiment, the carrier web may be coated with the suspension, the suspension dried, and a second coating applied to the dried suspension before sintering.

An exposed surface of the fluorinated polymer is rendered bondable. For example, the surface may be chemically etched with an etching composition, such as sodium metal/naphthalene/glycol ether mixture and sodium metal/anhydrous ammonia mixture. In other exemplary embodiments, the surface is rendered bondable through electrochemical treatments, metal sputtering and deposition of metals and/or metal oxides. For example, deposition of metals and metal oxides may include chemical vapor deposition and physical vapor deposition.

In another exemplary embodiment, the surface of the fluorinated polymer is rendered bondable by impregnating the material with colloidal silica. For example, the fluorinated polymer may include 25-70 wt% colloidal silica. In a further example, the surface may be rendered bondable by applying to the surface a coating of FEP or PFA including colloidal silica. The FEP or PFA coating is dried and sintered or fused to the surface of the fluorinated polymer, such as PTFE. In one particular embodiment, the fluorinated polymer surface is coated with a mixture of DuPont FEP TE-9503, Ludox® LS 30 colloidal silica dispersion from W.R. Grace Company, and Triton® X-100 non-ionic surfactant.

Once the surface is bondable, a high coefficient of friction material, such as silicone elastomer, is applied to the bondable surface. For example, precursors of silicone elastomer may be coated on the bondable surface and cured. In one exemplary embodiment, a platinum catalyzed liquid silicone rubber solution is applied to the bondable surface of the fluorinated polymer layer. The coating may be heated to deactivate or evaporate inhibitors, allowing the liquid silicone rubber solution to cure. In another exemplary embodiment, an organic peroxide catalyzed silicone rubber is coated to the fluorinated polymer layer and the coating is heated to facilitate curing. Other exemplary silicone elastomers include moisture-curing silicones. In one particular embodiment, the silicone elastomer precursor coating includes 50 parts 9252-500P Part A and 50 parts 9252-500P Part B liquid silicone rubber from Dow Corning Corporation in which Part A includes a platinum catalyst and Part B includes a crosslinking agent and a cure inhibitor capable of being removed by heat. In one exemplary embodiment, multiple coatings of the silicone material may be applied. In another exemplary embodiment, reinforcement material may be incorporated in the silicone layer.

In exemplary embodiments, the thickness of the fluorinated polymer layer is generally about 0.2-12 mils. In one example, the thickness is about 4-12 mils. In another example the thickness is about 0.2-4 mils, such as about 0.5-4 mils. The silicone layer is generally about 2-100 mils. In one example, the thickness of the silicone layer is about 4-20 mils. Alternatively, the thickness of the silicone layer is about 2-10 mils, such as about 5-10 mils. For example, when a reinforcement material is embedded in the fluorinated polymer layer, the thickness of the fluorinated polymer layer may be about 4-12 mils and the thickness of the silicone layer may be about 2-10 mils. Alternatively, when the reinforcement material is embedded in the silicone layer, the thickness of the fluorinated polymer layer may be about 0.5-4 mils and the thickness of the silicone layer may be about 4-20 mils.

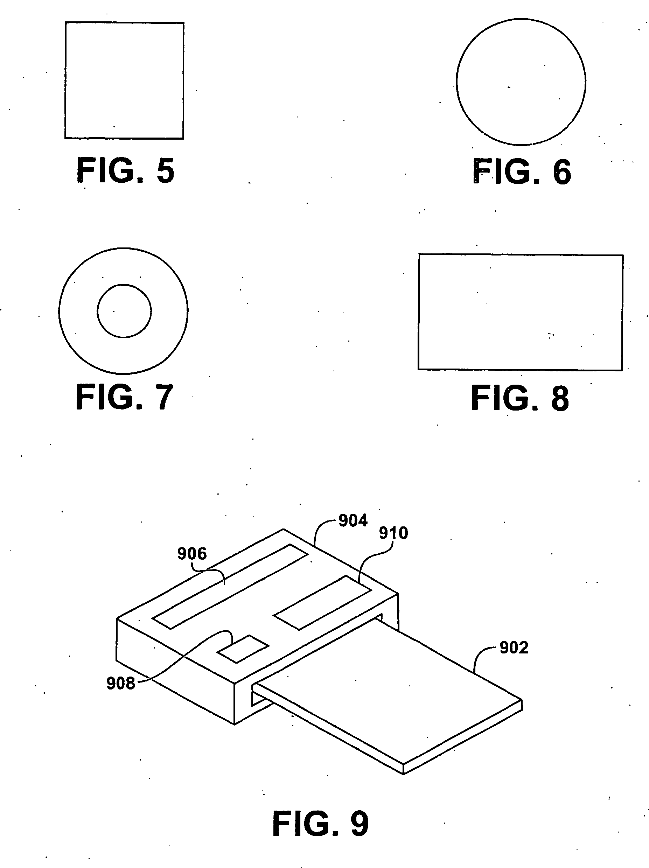

The cooking sheet liner may be shaped to conform to a particular cooking sheet or pan in which the cooking sheet liner is to be used. FIGS. 5, 6, 7, and 8 illustrate exemplary shapes of the cooking sheet. For example, FIG. 5 illustrates an exemplary square cooking sheet liner configured to fit in square cooking sheets or pans. FIG. 6 illustrates another exemplary embodiment in which the cooking sheet liner is round, such as may fit in a round pan or in a pie plate. In another exemplary embodiment, the cooking sheet liner may be shaped like a doughnut as illustrated in FIG. 7 and may fit in bunting pans. In a further exemplary embodiment, the cooking sheet liner may be rectangular, as illustrated in FIG. 8, to fit in rectangular cooking sheets and pans, such as 9-inch x13-inch pans.

In one exemplary embodiment, the cooking sheet liner is included in a merchandised article for commercial sale. FIG. 9 illustrates a merchandised article including a cooking sheet liner 902 and packaging 904. The packaging 904 is connected to the cooking sheet liner 902. The packaging 904 may include a sales message, title or description of the cooking sheet liner 906 and a barcode 908 or other indicator of sales price or facilitator of a sales transaction.

In addition, the merchandised article may include a set of printed instructions 910. The printed instructions 910 may be printed on the packaging 904 or included as a separate sheet with the packaging 904 and cooking sheet liner 902. In one exemplary embodiment, the instructions direct a user to place the cooking sheet liner 902 on a cooking sheet or in a pan prior to cooking an item. In another exemplary embodiment, the instructions 910 direct a user to place a high coefficient of friction side of the cooking sheet liner face down in the pan or on the cooking sheet and place uncooked food items on a low coefficient of friction side of the cooking sheet liner. In another exemplary embodiment, the instructions suggest removing the cooking sheet liner from the cooking sheet and cleaning the cooking sheet liner.

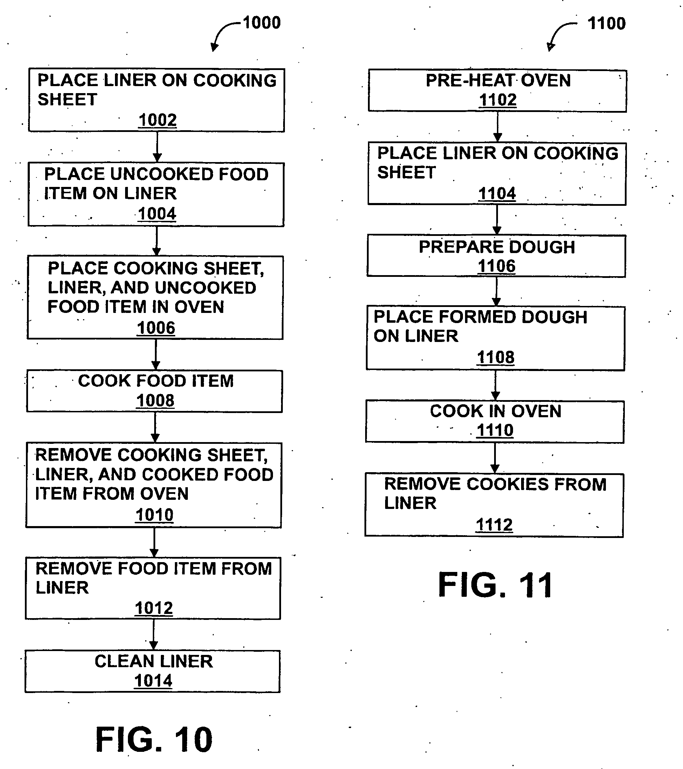

In one particular embodiment, the cooking sheet liner may be used to facilitate improved baking of baked goods. FIGS. 10 and 11 include flow diagrams illustrating exemplary methods for heat food items and, for example, baking baked goods. As illustrated in FIG. 10, the method 1000 includes placing a cooking sheet liner on a cooking sheet or in a pan, as shown at 1002. In one exemplary embodiment, the liner includes a first major surface having a high coefficient of friction and a second major surface having a low coefficient of friction. In one exemplary embodiment, the first major surface is formed of silicone elastomer. In another exemplary embodiment, the second major surface is formed of fluorinated polymer, such as PTFE.

Uncooked food items are placed on the cooking sheet liner, as shown at 1004. For example, the uncooked food items may be placed on the second major surface having a low coefficient of friction and formed of fluorinated polymer. The cooking sheet, cooking sheet liner and uncooked food item are placed in an oven, as shown at 1006. The food item may be heated to within a range of 93°C (200°F) to 316°C (600°F). The food item is then cooked, as shown at 1008, and the cooking sheet, cooking sheet liner and cooked food item are removed from the oven when the food item is cooked, as shown at 1010. The food item may be easily removed from the liner, as shown at 1012, and the liner may be cleaned, as shown at 1014.

In one particular example, the food items are baked goods, such as cookies. For example, the food items include chocolate chip cookies. One particular recipe for chocolate chip cookies includes two and a quarter cups of flour, one teaspoon baking soda, one teaspoon salt, one cup of butter (soft), three quarters cup sugar, three quarters cup brown sugar, one teaspoon vanilla extract, two eggs, and twelve ounces of chocolate chips.

As illustrated in FIG. 11, the oven is preheated, as shown at 1102, such as preheating to approximately 191°C (375°F). A cooking sheet liner is placed on a cooking sheet, as shown at 1104. The cooking sheet liner may, for example, include a first major surface formed of silicone elastomer and include a second major surface formed of fluorinated polymer. In one particular embodiment, the first major surface formed of silicone elastomer is placed faced down on the cooking sheet.

Dough is prepared, as shown at 1106. For example, the flour, baking soda and salt are mixed together. The butter, sugars, and vanilla extract are beaten until smooth. The eggs are beaten and added to the butter, sugar and vanilla extract mixture and the flour mixture, including the flour, baking soda and salt are slowly added to the butter, sugar and vanilla extract mixture. The chocolate chips may be added or folded into the dough.

Once the dough is formed, portions of the dough are placed on the liner, as shown at 1108. For example, tablespoon-sized balls of cookie dough may be placed on the second major surface of the liner.

As shown at 1110, the cookie dough, cooking sheet liner, and cooking sheet are placed in an oven to cook the cookie dough for approximately 10 minutes, such as approximately 9-11 minutes at 191°C (375°F). Once cooked, the cookies may be removed from the oven and subsequently removed from the liner, as shown at 1112. The liner may be removed from the cooking sheet and cleaned.

In one particular embodiment, the combination of the cooking sheet and the cooking sheet liner and food heating methods incorporating same as described above are particularly advantageous. For example, the cooking sheet liner may provide a cooking surface that prevents sticking, while the cooking sheet liner advantageously prevents sliding when placed on the cooking sheet. In a further exemplary embodiment, the cooking sheet liner is easy to clean and is sanitary. Additionally, the combination of the cooking sheet and the cooking sheet liner provides an advantageous insulating effect that controls browning and limits underside burning of food items. In particular, the layered structure of the cooking sheet liner has been found to limit underside burning more effectively than coatings and prior art liners. In one exemplary embodiment, the layered structure of the cooking sheet liner has been found to allow for increased rates of temperature change in cooking environments over traditional methods and to result in more consistent heating over the surface of a food item than traditional methods.

According to some aspects of the above embodiments, the multi-layered composite structure is less likely to slip off of a pan or cooking sheet than pure PTFE sheets and generally has a greater impact on heat transfer than pure PTFE sheets. In addition, the multi-layered composite structure is more damage resistant and easier to clean than pure silicone baking sheets.

Further details of the construction of the liner may be found in US Patent Application Publication No. US 2001/0034170A1 (US '170), incorporated herein by reference. It is noted that the US '170 is generally directed to composite structures utilized in the context of closed-loop belts, not in the context of cooking sheet liners, and cooking support assemblies and methods of heating food items incorporating same.

The above-disclosed subject matter is to be considered illustrative, and not restrictive, and the appended claims are intended to cover all such modifications, enhancements, and other embodiments, which fall within the true scope of the present invention. Thus, to the maximum extent allowed by law, the scope of the present invention is to be determined by the broadest permissible interpretation of the following claims and their equivalents, and shall not be restricted or limited by the foregoing detailed description.

## Claims

1. A method for heating a food item, the method comprising:
placing a food item on a cooking substrate (1004),
the cooking substrate having a first major surface formed of a silicone elastomer and having a second major surface formed of a fluorinated polymer; and
placing the cooking substrate and the food item in an oven (1006); and
heating same (1008),
wherein placing the food item on the cooking substrate comprises placing the food item on the second major surface.

2. The method according to claim 1,
wherein the cooking substrate is a cooking sheet liner;
the method further comprising:
placing the cooking sheet liner on a cooking sheet (1002; 1104); and
wherein placing the cooking substrate and the food item in the oven and heating same comprises:
placing the cooking sheet in the oven and heating same.

3. The method of claim 2,
wherein the food item is a cookie,
the method further comprising:
preparing cookie dough (1106); and
placing at least one ball of cookie dough on the cooking sheet liner (1108).

4. The method of claim 2, further comprising:
preheating the oven (1102).

5. The method of claim 2, further comprising:
heating within a range of 93°C (200°F) to 316°C (600°F).

6. The method according to claim 2,
wherein placing the cooking sheet liner on the cooking sheet includes placing the cooking sheet liner such that the first major surface substantially contacts the cooking sheet and placing the food item on the second major surface.

7. The method according to claim 2,
wherein the fluorinated polymer includes PTFE.

8. The method according to claim 2
wherein the cooking sheet liner includes reinforcement.

9. The method according to claim 8,
wherein the reinforcement includes woven fiberglass.

10. The method of claim 8,
wherein the reinforcement includes woven aramid yarns.

11. The method of claim 8,
wherein the reinforcement includes non-woven fiberglass.

12. The method of claim 8,
wherein the reinforcement is coated with the fluorinated polymer.

13. The method of claim 12,
wherein the silicone elastomer is coupled to the fluorinated polymer.

14. The method of claim 8,
wherein the reinforcement is coated with the silicone elastomer.

15. The method of claim 2,
wherein the silicone elastomer has a higher coefficient of friction than the fluorinated polymer.

16. The method of claim 2,
wherein the cooking sheet is selected from a group consisting of baking pans, pie plates, cookie sheets, roasting pans, bunting pans, and cake pans.

17. The method according to claim 1,
wherein the cooking substrate is a cooking sheet liner;
and wherein the elastomeric material has a higher coefficient of friction than the polymeric material,
the method further comprising:
placing the cooking sheet liner on a cooking sheet (1002); and
wherein placing the cooking substrate and the food item in the oven and heating same comprises:
placing the cooking sheet in the oven (1006) and heating same (1008).

18. The method according to claim 17,
wherein the elastomeric material includes silicone rubber.

19. The method according to claim 17,
wherein the polymeric material includes fluorinated polymer.

20. The method according to claim 17,
wherein the elastomeric material is stain resistant.

21. The method according to claim 17,
wherein the polymeric material is stain resistant.

22. The method according to any of the claims 1 to 3,
wherein the cooking substrate is a planar sheet.

23. The method according to claim 22,
wherein the cooking substrate is a cooking sheet liner.

24. The method according to any of the claims 1 to 3, further comprising:
placing the cooking substrate on a rigid backing member.

25. The method according to claim 24,
wherein the rigid backing member is a cooking sheet.

26. A cooking support assembly comprising:
a rigid backing member (104); and
a cooking substrate (102; 300; 400) having a first major surface (108; 308; 410) formed of silicone elastomer and having a second major surface (106; 306; 408) formed of fluorinated polymer, the first major surface substantially contacting the rigid backing member, and the second major surface being adapted for being in contact with a food item (210).

27. The cooking support assembly according to claim 26,
wherein the rigid backing member is a cooking sheet.

28. The cooking support assembly according to claim 26,
wherein the cooking substrate is a cooking sheet liner.

29. The cooking support assembly according to claim 26,
wherein the first major surface has a higher coefficient of friction than the second major surface.

30. The cooking support assembly according to claim 26, further comprising:
a food item (210) in contact with the second major surface of the cooking substrate.

## Patentansprüche

1. Verfahren zum Erhitzen eines Lebensmittels, wobei das Verfahren Folgendes umfasst:
Platzieren eines Lebensmittels auf einen Backträger (1004),
wobei der Backträger eine aus einem Silikonelastomer hergestellte erste Hauptfläche und eine aus einem fluorierten Polymer hergestellte zweite Hauptfläche aufweist, und
Platzieren des Backträgers und des Lebensmittels in einen Ofen (1006); und
Erwärmen derselben (1008),
wobei Platzieren des Lebensmittels auf dem Backträger Platzieren des Lebensmittels auf die zweite Hauptfläche umfasst.

2. Verfahren nach Anspruch 1,
wobei der Backträger eine Backformauskleidung ist;
wobei das Verfahren weiterhin Folgendes umfasst:
Platzieren der Backformauskleidung auf eine Backform (1002; 1104); und
wobei Platzieren des Backträgers und des Lebensmittels in den Ofen und Erwärmen derselben Folgendes umfasst:
Platzieren der Backform in den Ofen und Erwärmen derselben.

3. Verfahren nach Anspruch 2,
wobei das Lebensmittel ein Keks ist,
wobei das Verfahren weiterhin Folgendes umfasst:
Vorbereiten des Keksteigs (1106); und
Platzieren mindestens einer Keksteigkugel auf der Backformauskleidung (1108).

4. Verfahren nach Anspruch 2, das weiterhin Folgendes umfasst:
Vorheizen des Ofens (1102).

5. Verfahren nach Anspruch 2, das weiterhin Folgendes umfasst:
Erhitzen in einem Bereich von 93°C (200°F) bis 316°C (600°F).

6. Verfahren nach Anspruch 2,
wobei Platzieren der Backformauskleidung auf die Backform derartiges Platzieren der Backformauskleidung umfasst, dass die erste Hauptfläche die Backform im Wesentlichen berührt und das Lebensmittel auf der zweiten Hauptfläche platziert wird.

7. Verfahren nach Anspruch 2,
wobei das fluorierte Polymer PTFE enthält.

8. Verfahren nach Anspruch 2,
wobei die Backformauskleidung eine Verstärkung enthält.

9. Verfahren nach Anspruch 8,
wobei die Verstärkung gewebtes Fiberglas enthält.

10. Verfahren nach Anspruch 8,
wobei die Verstärkung gewebtes Aramidgarn enthält.

11. Verfahren nach Anspruch 8,
wobei die Verstärkung Fiberglas-Vlies enthält.

12. Verfahren nach Anspruch 8,
wobei die Verstärkung mit dem fluorierten Polymer beschichtet ist.

13. Verfahren nach Anspruch 12,
wobei das Silikonelastomer mit dem fluorierten Polymer verbunden ist.

14. Verfahren nach Anspruch 8,
wobei die Verstärkung mit dem Silikonelastomer beschichtet ist.

15. Verfahren nach Anspruch 2,
wobei das Silikonelastomer einen größeren Reibungskoeffizienten als das fluorierte Polymer aufweist.

16. Verfahren nach Anspruch 2,
wobei die Backform aus einer aus Backblechen, Kuchenplatten, Plätzchenformen, Brätern, Napfkuchenformen und Kuchenformen bestehenden Gruppe ausgewählt ist.

17. Verfahren nach Anspruch 1,
wobei der Backträger eine Backformauskleidung ist; und wobei das elastomere Material einen größeren Reibungskoeffizienten aufweist als das polymere Material,
wobei das Verfahren weiterhin Folgendes umfasst:
Platzieren der Backformauskleidung auf eine Backform (1002) und
wobei Platzieren des Backträgers und des Lebensmittels in den Ofen und Erwärmen derselben Folgendes umfasst:
Platzieren der Backform in den Ofen (1006) und Erwärmen (1008) derselben.

18. Verfahren nach Anspruch 17,
wobei das elastomere Material Silikonkautschuk umfasst.

19. Verfahren nach Anspruch 17,
wobei das polymere Material fluoriertes Polymer umfasst.

20. Verfahren nach Anspruch 17,
wobei das elastomere Material fleckenresistent ist.

21. Verfahren nach Anspruch 17,
wobei das polymere Material fleckenresistent ist.

22. Verfahren nach einem der Ansprüche 1 bis 3,
wobei der Backträger ein planares Flächengebilde ist.

23. Verfahren nach Anspruch 22,
wobei der Backträger eine Backformauskleidung ist.

24. Verfahren nach einem der Ansprüche 1 bis 3, das weiterhin Folgendes umfasst:
Platzieren des Backträgers auf ein starres Stützglied.

25. Verfahren nach Anspruch 24,
wobei das starre Stützglied eine Backform ist.

26. Backträgeranordnung, die Folgendes umfasst:
ein starres Stützglied (104); und
einen Backträger (102; 300; 400) mit einer ersten Hauptfläche (108; 308; 410), die aus Silikonelastomer hergestellt ist, und einer zweiten Hauptfläche (106; 306; 408), die aus fluoriertem Polymer hergestellt ist, wobei die erste Hauptfläche das starre Stützglied im Wesentlichen berührt und die zweite Hauptfläche dazu ausgeführt ist, mit einem Lebensmittel (210) in Kontakt zu stehen.

27. Backträgeranordnung nach Anspruch 26,
wobei das starre Stützglied eine Backform ist.

28. Backträgeranordnung nach Anspruch 26,
wobei der Backträger eine Backformauskleidung ist.

29. Backträgeranordnung nach Anspruch 26,
wobei die erste Hauptfläche einen größeren Reibungskoeffizienten aufweist als die zweite Hauptfläche.

30. Backträgeranordnung nach Anspruch 26, die weiterhin Folgendes umfasst:
ein Lebensmittel (210), das mit der zweiten Hauptfläche des Backträgers in Kontakt steht.

## Revendications

1. Procédé de chauffage d'un aliment, le procédé comprenant :
la mise en place d'un aliment sur un support de cuisson (1004), le support de cuisson comportant une première surface principale formée d'un élastomère silicone et comportant une deuxième surface principale formée d'un polymère fluoré ; et
la mise en place du support de cuisson et de l'aliment dans un four (1006) ; et
le chauffage de celui-ci (1008),
dans lequel la mise en place de l'aliment sur le support de cuisson comprend la mise en place de l'aliment sur la deuxième surface principale.

2. Procédé selon la revendication 1, dans lequel le support de cuisson est une feuille pour plaque de four, le procédé comprenant en outre :
la mise en place de la feuille pour plaque de four sur une plaque de four (1002 ; 1104) ; et dans lequel la mise en place du support de cuisson et de l'aliment dans le four et le chauffage de celui-ci comprennent :
la mise en place de la plaque de cuisson dans le four et le chauffage de celui-ci.

3. Procédé selon la revendication 2, dans lequel l'aliment est un biscuit, le procédé comprenant en outre :
la préparation de pâte à biscuits (1106) ; et
la mise en place d'au moins une boule de pâte à biscuits sur la feuille pour plaque de four (1108).

4. Procédé selon la revendication 2, comprenant en outre :
le préchauffage du four (1102).

5. Procédé selon la revendication 2, comprenant en outre :
le chauffage dans une plage de 93 °C (200 °F) à 316 °C (600 °F).

6. Procédé selon la revendication 2, dans lequel la mise en place de la feuille pour plaque de four sur la plaque de four comprend la mise en place de la feuille pour plaque de four de sorte que la première surface principale soit substantiellement en contact avec la plaque de four et la mise en place de l'aliment sur la deuxième surface principale.

7. Procédé selon la revendication 2, dans lequel le polymère fluoré comprend le PTFE.

8. Procédé selon la revendication 2, dans lequel la feuille pour plaque de four comprend un renforcement.

9. Procédé selon la revendication 8, dans lequel le renforcement comprend de la fibre de verre tissée.

10. Procédé selon la revendication 8, dans lequel le renforcement comprend des fils d'aramide tissés.

11. Procédé selon la revendication 8, dans lequel le renforcement comprend de la fibre de verre non tissée.

12. Procédé selon la revendication 8, dans lequel le renforcement est revêtu du polymère fluoré.

13. Procédé selon la revendication 12, dans lequel l'élastomère silicone est couplé au polymère fluoré.

14. Procédé selon la revendication 8, dans lequel le renforcement est revêtu de l'élastomère silicone.

15. Procédé selon la revendication 2, dans lequel l'élastomère silicone a un coefficient de frottement supérieur à celui du polymère fluoré.

16. Procédé selon la revendication 2, dans lequel la plaque de four est sélectionnée dans le groupe constitué des moules à pain, des tourtières, des plaques à biscuits, des plats à rôtir, des moules à manqué, et des moules à gâteau.

17. Procédé selon la revendication 1, dans lequel le support de cuisson est une feuille pour plaque de four ;
et dans lequel le matériau élastomère a un coefficient de frottement supérieur à celui du matériau polymère,
le procédé comprenant en outre :
la mise en place de la feuille pour plaque de four sur une plaque de four (1002) ; et
dans lequel la mise en place du support de cuisson et de l'aliment dans le four et le chauffage de celui-ci comprennent :
la mise en place de la plaque de four dans le four (1006) et le chauffage de celui-ci (1008).

18. Procédé selon la revendication 17, dans lequel le matériau élastomère comprend un caoutchouc silicone.

19. Procédé selon la revendication 17, dans lequel le matériau polymère comprend un polymère fluoré.

20. Procédé selon la revendication 17, dans lequel le matériau élastomère est résistant aux taches.

21. Procédé selon la revendication 17, dans lequel le matériau polymère est résistant aux taches.

22. Procédé selon l'une quelconque des revendications 1 à 3, dans lequel le support de cuisson est une plaque plane.

23. Procédé selon la revendication 22, dans lequel le support de cuisson est une feuille pour plaque de four.

24. Procédé selon l'une quelconque des revendications 1 à 3, comprenant en outre :
la mise en place du support de cuisson sur un élément de support rigide.

25. Procédé selon la revendication 24, dans lequel l'élément de support rigide est une plaque de four.

26. Ensemble de support pour cuisson, comprenant :
un élément de support rigide (104) ; et
un support de cuisson (102 ; 300 ; 400) comportant une première surface principale (108 ; 308 ; 410) formée d'un élastomère silicone et comportant une deuxième surface principale (106 ; 306 ; 408) formée d'un polymère fluoré, la première surface principale étant substantiellement en contact avec l'élément de support rigide, et la deuxième surface principale étant adaptée pour être en contact avec un aliment (210).

27. Ensemble de support pour cuisson selon la revendication 26, dans lequel l'élément de support rigide est une plaque de four.

28. Ensemble de support pour cuisson selon la revendication 26, dans lequel le support de cuisson est une feuille pour plaque de four.

29. Ensemble de support pour cuisson selon la revendication 26, dans lequel la première surface principale a un coefficient de frottement supérieur à celui de la deuxième surface principale.

30. Ensemble de support pour cuisson selon la revendication 26, comprenant en outre :
un aliment (210) en contact avec la deuxième surface principale du support de cuisson.
